# EUROPEAN PATENT SPECIFICATION

(11) **EP 0 755 826 B1**
(45) Date of publication and mention of the grant of the patent: **21.06.2000**
(21) Application number: 96111768.6
(22) Date of filing: 22.07.1996
(51) Int. Cl.: B60R 9/10

(54) **Lowerable bicycle rack particularly for motor vehicles, recreational vehicles, vans and the like**
Absenkbarer Fahrradträger, insbesondere für Kraftfahrzeuge, Freizeitfahrzeuge, Transporter oder dergleichen
Porte-bicyclettes abaissable en particulier pour véhicules automobiles, véhicules de loisirs, fourgons ou similaires

(30) Priority: 26.07.1995 IT MI951632
(43) Date of publication of application: 29.01.1997
(73) Proprietor: Pozzi, Carlo Maurizio, CH-6977 Ruvigliana (CH)
(72) Inventor: Pozzi, Carlo Maurizio, CH-6977 Ruvigliana (CH)
(74) Representative: Modiano, Guido, Dr.-Ing.

(56) References cited:
- CA-A- 1 328 858
- DE-A- 4 214 567
- DE-U- 9 013 591
- DE-U- 9 116 250
- DE-U- 9 214 141
- DE-U- 9 413 724

## Description

The present invention relates to a lowerable bicycle rack, particularly for motor vehicles, recreational vehicles, vans, and the like.

It is known that bicycle racks installed on motor vehicles, campers, caravans, and the like can be installed at the rear part of the vehicle; when using this type of installation, the bicycle racks must be mounted in an elevated position, since according to the provisions of the current road traffic code, said bicycle racks must not cover the registration plate of the vehicle and must have a certain angle with respect to the lights of the vehicle to avoid hindering their visibility.

The problem encountered with these types of bicycle rack arises from the fact that in order to fit the bicycles on the rack it is necessary to lift them to a certain height and therefore apply an effort that is sometimes considerable or in any case difficult for elderly or short-stature people.

In order to try to solve this problem, solutions have already been marketed that allow to lower the structure of the bicycle rack to a lower position so as to facilitate bicycle positioning.

However, these solutions are very complicated from a structural point of view, are very expensive, and are furthermore difficult to use in order to pass from the lowered position to the raised position.

In particular, a conventional solution uses a fixed frame that is associated with the vehicle and a movable frame, which forms the bicycle supporting part, connected to the fixed frame by virtue of a pantograph system that allows to pass from a lowered position to a raised position and vice versa. However, with this solution it is necessary to apply considerable forces to assume the raised position; moreover, the movable frame part is subjected to a combined rotary and translatory motion that requires considerable force to perform.

CA-A-1 328 858 discloses a carrier device detachably mountable on a motor vehicle to lift and carry another vehicle such as a wheelchair, motor bike, motorized wheeled cart for the handicapped, or the like. The carrier device comprises a rigid frame detachably mountable on the motor vehicle and sliding frame which is vertically slidably attached to the rigid frame and which has pivotally attached thereto vehicle supporting elements selectively arrangeable in a horizontal supporting position and in a vertical collapsed non-working position. The sliding frame is vertically slidably attached to the rigid frame by means of a pair of lower vertical hollow tubes of the rigid frame in which vertical tubes of the sliding frame are slidably accommodated. A winch and cable are provided for vertically moving the sliding frame with respect to the rigid frame, which is provided with a protruding rigid horizontal portion selectively insertable and lockable into a hollow tube portion of the motor vehicle hitch for detachably mounting the rigid frame to the motor vehicle.

The aim of the invention is to eliminate the above described drawbacks, providing a lowerable bicycle rack particularly for motor vehicles, recreational vehicles, vans, and the like, that can assume different vertical positions without requiring particular efforts for the user.

Within the scope of this aim, a particular object of the invention is to provide a bicycle rack in which the position can be varied without discontinuities, thus always having the possibility of selecting the optimum position.

Another object of the present invention is to provide a bicycle rack that does not require intense efforts to move it and furthermore does not produce backward translatory motions during movement.

Another object of the present invention is to provide a lowerable bicycle rack that can be easily obtained starting from commonly commercially available elements and materials and is furthermore competitive from a merely economic point of view.

In accordance with the invention, there is provided a lowerable bicycle rack as defined in claim 1. Further improvements of the bicycle rock are defined in the dependent claims.

The characteristics and advantages of the invention will become apparent from the description of a preferred but not exclusive embodiment of a lowerable bicycle rack particularly for motor vehicles, recreational vehicles, vans, and the like, illustrated only by way of non-limitative example in the accompanying drawings, wherein:

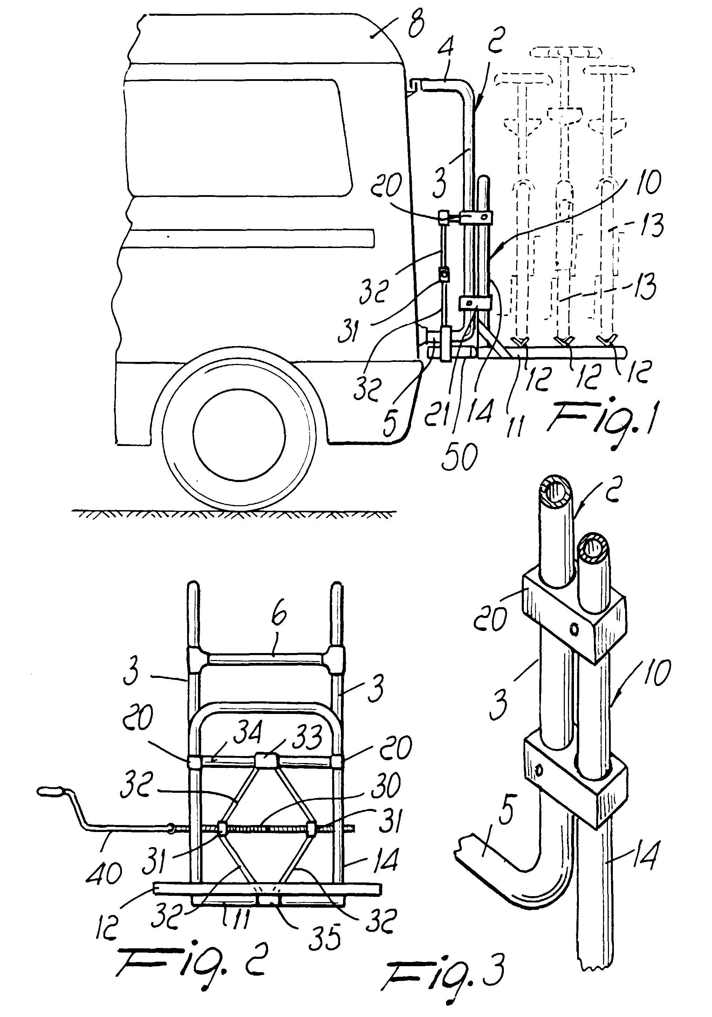

figure 1 is a schematic lateral elevation view of the bicycle rack according to the invention, applied to a vehicle;
figure 2 is a front view of the bicycle rack;

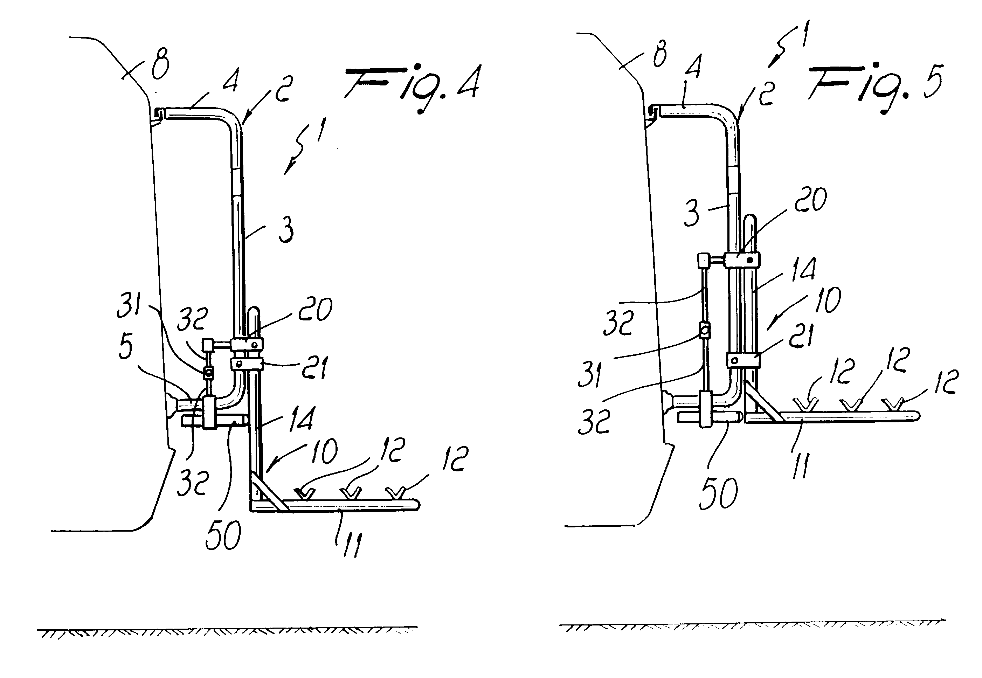

figure 3 is a schematic perspective view of the detail of the linear sliding means that interact between the movable frame and the fixed frame;
figure 4 is a lateral elevation view of the bicycle rack, shown in lowered position;
figure 5 is a lateral elevational view of the bicycle rack, shown in raised position;
figure 6 is a view of the actuator means in extended position;
figure 7 is a view of the actuator means in retracted position.

With reference to the above figures, the lowerable bicycle rack particularly for motor vehicles, recreational vehicles, vans, and the like, according to the invention, generally designated by the reference numeral 1, comprises a fixed frame 2 that is advantageously constituted by two vertical uprights 3 that end with upper coupling portions 4 and lower coupling portions 5 and are mutually joined by a cross-member 6.

Said fixed frame 2 can be fixed, in a per se known manner, to the rear part of a motor vehicle 8 and the like and is positioned so that it lies above the region affected by the registration plate and so as to avoid impairing the visibility of the rear lights of the motor vehicle.

A movable frame 10 is connected to the fixed frame 2 and advantageously is substantially L-shaped, with a horizontal arm 11 on which runners 12 for accommodating bicycles, generally designated by the reference numeral 13, are located.

The vertical arm of the movable frame has two outer uprights 14 that are arranged so as to correspond to the uprights 3.

The particularity of the invention is constituted by the fact that there are linear sliding means that act between the movable frame 10 and the fixed frame 2, so as to allow a linear translatory motion of the movable frame.

Said linear sliding means are constituted by upper translatory motion blocks, generally designated by the reference numeral 20, that are fixed to the outer uprights 14 and slidingly engage the uprights 3.

Furthermore, there are lower translatory motion blocks 21 that are fixed to the uprights 3 and slidingly engage the uprights 14 so as to act as guides.

The particularity is constituted by the fact that there are actuator means that act on said sliding blocks 20 so as to produce their translatory motion.

A possible embodiment of the translatory motion actuator means, which must not be interpreted in a limitative sense, is constituted by a bar with right- and left-hand threads 30 that engages corresponding sliding female threads 31 that are connected, by means of articulated linkages 32, respectively to a central body 33 that is rigidly coupled to a cross-member 34 that is connected to the translatory motion blocks 20; symmetrically, the lower articulated linkages are connected to a lower fixed central body 35 that is rigidly coupled to the fixed frame 2.

With this arrangement, by acting with an actuation rod 40 that turns the double-threaded bar 30, the female threads 31 perform a translatory motion with respect to each other in one direction or in the opposite direction; in particular, when the female threads move mutually apart, the body 33 is moved toward the double-threaded bar 30 and therefore the movable frame 10 is lowered; likewise, the translatory motion of the female threads 31 toward each other causes the movable frame 10 to rise again.

Of course, it is possible to use other equivalent means to perform the translatory motion, without altering the concept that the particular characteristic is constituted by the fact that the movable frame 10 moves in a linear fashion with respect to the fixed frame 2.

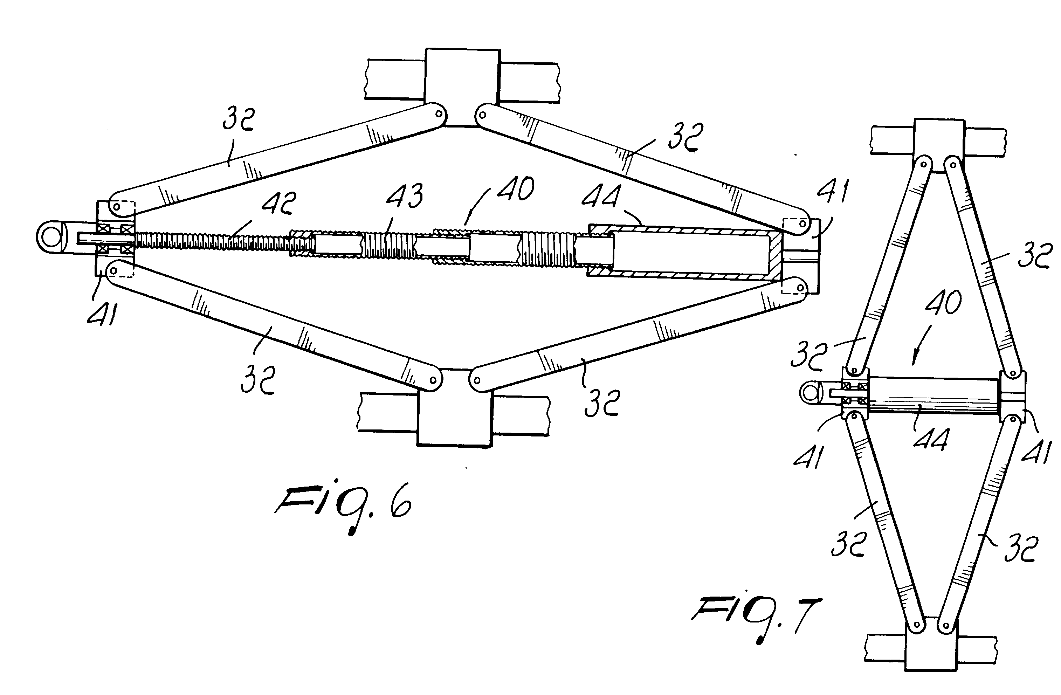

Thus, for example, as shown in figures 6 and 7, the actuator means are constituted by a telescopic strut 40 composed of threaded elements that acts between the central blocks 41 to which the linkages 32 are articulated.

In greater detail, there is a threaded internal element 42 that is rotatably associated with a central block 41 and engages the internal thread of an externally threaded intermediate element 43 that can engage another intermediate element, again designated by the reference numeral 43, or the internal thread of an outer tubular element 44 that is internally threaded and is supported by the other block 41.

Said actuation means can be constituted, for example, by a bar with a single thread that rotatably engages an element that is pivoted to the linkages 32 and a female thread that engages another pair of linkages; likewise, it is possible to provide cable systems, belt systems, gear systems, and the like.

It should be added to the above that a locator 50 is provided at the lower part of the fixed frame 2 and acts as support for the movable frame 10, thus facilitating its sliding.

From the above description it is thus evident that the invention achieves the intended aim and objects, and in particular the fact is stressed that a lowerable bicycle rack is provided which allows to easily perform a linear translatory motion of the bicycle-supporting movable frame without causing particular constructive complexities and, most of all, providing a system that requires limited force for the translatory motion of the movable frame.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A lowerable bicycle rack (1) for motor vehicles, recreational vehicles, vans, and the like, comprising a fixed frame (2), which can be connected to a motor vehicle and the like, and a movable frame (10) for supporting at least one bicycle (13), and linear sliding means (20,21) that interact between said movable frame (10) and said fixed frame (2) for the linear translatory motion of said movable frame (10), the rack being characterized in that said linear sliding means are constituted by upper translatory motion blocks (20) that are rigidly coupled to said movable frame (10) and slidingly engage said fixed frame (2), and lower translatory motion blocks (21) which are rigidly coupled to said fixed frame (2) and sliding by engage said movable frame (10), such that said upper translatory motion blocks (20) fixed to said movable frame (10) slide on said fixed frame (2) between a lowered bicycle-loading position of said movable frame (10) and a raised bicycle-carrying position of said movable frame (10) and such that said movable frame (10) slides within said lower translatory motion blocks (21) fixed to said fixed frame (2) between the lower bicycle-loading position of said movable frame (10) and the raised bicycle-carrying position of said movable frame (10).

2. A bicycle rack according to claim 1, characterized in that it comprises actuator means 30-35;40-44) that act on said linear sliding means (20,21) for the translatory movement of said movable frame (10).

3. A bicycle rack according to claim 2, characterized in that said actuator means are constituted by a double-threaded bar (30) that can engage female threads (31) that are connected, by means of articulated linkages (32), to an upper central body (33,34), rigidly coupled to said upper translatory motion block (20), and to a lower central body (35) rigidly coupled to said fixed frame (2).

4. A bicycle rack according to claim 2, characterized in that said actuator means are constituted by a telescopic strut (40).

5. A bicycle rack according to claim 4, characterized in that said telescopic strut (40) is constituted by a plurality of mutually interpenetrating threaded elements (42,43).

6. A bicycle rack according to claim 1, characterized in that it comprises a locator (50) that is rigidly coupled to the lower part of said fixed frame (2) and slidingly engages said movable frame (10).

## Patentansprüche

1. Absenkbares Fahrradgestell (1) für Motorfahrzeuge, Erholungsfahrzeuge, Transportwagen und dgl., umfassend einen feststehenden Rahmen (2), welcher mit einem Motorfahrzeug und dgl. verbunden werden kann, und einen beweglichen Rahmen (10) zum Tragen mindestens eines Fahrrads (13) und lineare Verschiebemittel (20, 21), welche zwischen dem beweglichen Rahmen (10) und dem feststehenden Rahmen (2) für eine lineare Schubbewegung des beweglichen Rahmens (10) wirken, wobei das Gestell dadurch gekennzeichnet ist, daß die linearenVerschiebemittel gebildet werden durch obere Schubbewegungsblocks (20), welche fest mit dem beweglichen Rahmen (10) gekoppelt sind und mit dem festen Rahmen (2) gleitend in Eingriff stehen, und durch untere Schubbewegungsblocks (21), welche fest mit dem feststehenden Rahmen (2) gekoppelt sind und mit dem beweglichen Ramen (10) gleitend in Eingriff stehen, derart, daß die oberen Schubbewegungsblocks (20), welche am beweglichen Rahmen (10) fixiert sind, am feststehenden Rahmen (2) zwischen einer abgesenkten Fahrradladestellung des beweglichen Rahmens (10) und einer angehobenen Fahrradtragstellung des beweglichen Rahmens (10) gleiten und derart, daß der bewegliche Rahmen (10) innerhalb der unteren Schubbewegungsblocks (21), die am festen Rahmen (2) fixiert sind, zwischen der unteren Fahrradladestellung des beweglichen Rahmens (10) und der angehobenen Fahrradtragstellung des beweglichen Rahmens (10) gleitet.

2. Fahrradgestell nach Anspruch 1, **dadurch gekennzeichnet**, daß es Betätigungsmittel (30-35, 40-44) umfaßt, welche auf die linearen Verschiebemittel (20, 21) für die Schubbewegung des beweglichen Rahmens (10) wirken.

3. Fahrradgestell nach Anspruch 2, **dadurch gekennzeichnet**, daß die Betätigungsmittel gebildet werden durch eine zweigewindige Stange (30), welche mit Muttergewinden (31) in Eingriff gebracht werden kann, welche mittels Gelenkgestängen (32) mit einem oberen Zentralkörper (33, 34), der fest mit dem oberen Schubbewegungsblock (20) gekoppelt ist, und einem unteren Zentralkörper (35), der fest mit dem festen Rahmen (2) gekoppelt ist, verbunden sind.

4. Fahrradgestell nach Anspruch 2, **dadurch gekennzeichnet**, daß die Betätigungsmittel gebildet werden durch einen Teleskopstab (40).

5. Fahrradgestell nach Anspruch 4, **dadurch gekennzeichnet**, daß der Teleskopstab (40) durch eine Vielzahl gegenseitig ineinandergreifenden Gewindeelementen (42, 43) gebildet wird.

6. Fahrradgestell nach Anspruch 1, **dadurch gekennzeichnet**, daß es ein Auflager (50) umfaßt, das fest mit dem unteren Teil des feststehenden Rahmens (2) gekoppelt ist und mit dem beweglichen Rahmen (10) gleitend in Eingriff steht.

## Revendications

1. Porte-bicyclettes abaissable (1) pour des véhicules automobiles, des véhicules de loisirs, des fourgons et analogues, comprenant un bâti fixe (2), qui peut être relié à un véhicule automobile et analogue, et un bâti mobile (10) pour supporter au moins une bicyclette (13), et des moyens de coulissement linéaire (20, 21) qui interagissent entre ledit bâti mobile (10) et ledit bâti fixe (2) pour le déplacement linéaire en translation dudit bâti mobile (10),
le porte-bicyclettes étant caractérisé en ce que lesdits moyens de coulissement linéaire sont constitués par des blocs supérieurs de déplacement en translation (20) qui sont rigidement couplés audit bâti mobile (10) et engagent de façon coulissante ledit bâti fixe (2), et des blocs inférieurs de déplacement en translation (21) qui sont rigidement couplés audit bâti fixe (2) et engagent de façon coulissante ledit bâti mobile (10), de sorte que lesdits blocs supérieurs de déplacement en translation (20) fixés audit bâti mobile (10) coulissent sur ledit bâti fixe (2) entre une position abaissée de chargement des bicyclettes dudit bâti mobile (10) et une position soulevée de transport des bicyclettes dudit bâti mobile (10), et de sorte que ledit bâti mobile (10) coulisse à l'intérieur desdits blocs inférieurs de déplacement en translation (21) fixés audit bâti fixe (2) entre la position abaissée de chargement des bicyclettes dudit bâti mobile (10) et la position soulevée de transport des bicyclettes dudit bâti mobile (10).

2. Porte-bicyclettes selon la revendication 1,
caractérisé en ce qu'il comprend des moyens d'actionnement (30 - 35 ; 40 - 44) qui agissent sur lesdits moyens de coulissement linéaire (20, 21) pour le déplacement en translation dudit bâti mobile (10).

3. Porte-bicyclettes selon la revendication 2,
caractérisé en ce que lesdits moyens d'actionnement sont constitués par une barre (30) à double filetage qui peut engager des taraudages (31) qui sont reliés, au moyen de liaisons articulées (32), à un corps central supérieur (33, 34), couplé de façon rigide audit bloc supérieur (20) de déplacement en translation, et à un corps central inférieur (35) rigidement couplé audit bâti fixe (2).

4. Porte-bicyclettes selon la revendication 2,
caractérisé en ce que lesdits moyens d'actionnement sont constitués par une barre télescopique (40).

5. Porte-bicyclettes selon la revendication 4,
caractérisé en ce que ladite barre télescopique (40) est constituée par une pluralité d'éléments filetés (42, 43) s'interpénétrant de façon mutuelle.

6. Porte-bicyclettes selon la revendication 1,
caractérisé en ce qu'il comprend une pièce de positionnement (50) qui est rigidement couplée à la partie inférieure dudit bâti fixe (2) et engage de façon coulissante ledit bâti mobile (10).
